(19) Europäisches Patentamt / European Patent Office / Office européen des brevets

(11) **EP 4 376 314 A1**

(12) # EUROPEAN PATENT APPLICATION
published in accordance with Art. 153(4) EPC

(43) Date of publication:
**29.05.2024 Bulletin 2024/22**

(21) Application number: **22846222.2**

(22) Date of filing: **20.07.2022**

(51) International Patent Classification (IPC):
**H04B 7/0408** (2017.01)    **H04B 7/06** (2006.01)
**H04B 17/318** (2015.01)    **H04W 74/08** (2009.01)
**H04L 5/00** (2006.01)

(52) Cooperative Patent Classification (CPC):
**H04B 7/0408; H04B 7/06; H04B 17/318;
H04L 5/00; H04W 74/08**

(86) International application number:
**PCT/KR2022/010612**

(87) International publication number:
**WO 2023/003352 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.07.2021 KR 20210095006**

(71) Applicant: **LG Electronics Inc.**
**Yeongdeungpo-gu
Seoul 07336 (KR)**

(72) Inventors:
- **KANG, Jiwon**
  **Seoul 06772 (KR)**
- **JUNG, Sunghoon**
  **Seoul 06772 (KR)**
- **KIM, Hongsuk**
  **Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND APPARATUS FOR PERFORMING BEAM RECOVERY IN WIRELESS COMMUNICATION SYSTEM**

(57)    Disclosed are a method and apparatus for performing beam recovery in a wireless communication system. A method for performing beam failure recovery (BFR) in a wireless communication system, according to an embodiment of the present disclosure, may comprise the steps of: identifying a first control resource set (CORESET) pool and a second CORESET pool, on the basis of configuration information; on the basis that beam failure regarding a spatial parameter associated with the first CORESET pool is detected, transmitting a physical random access channel (PRACH) for the BFR, on the basis of a spatial parameter associated with the second CORESET pool; receiving a response regarding the PRACH, on the basis of the spatial parameter associated with the second CORESET; transmitting MAC-CE for the BFR, on the basis of the spatial parameter associated with the second CORESET pool; and receiving a response regarding the MAC-CE, on the basis of the spatial parameter associated with the second CORESET pool.

FIG.9

```
                    START
                      |
   Identify first CORESET pool and second      S910
              CORESET pool
                      |
          Transmit BFR PRACH                    S920
   based on a spatial parameter associated
        with second 2 CORESET pool
                      |
     Receive response to BFR PRACH              S930
   based on a spatial parameter associated
        with second 2 CORESET pool
                      |
          Transmit BFR MAC-CE                   S940
   based on a spatial parameter associated
        with second 2 CORESET pool
                      |
     Receive response to BFR MAC-CE             S950
   based on a spatial parameter associated
        with second 2 CORESET pool
                      |
                     END
```

**Description**

[Technical Field]

The present disclosure relates to a wireless communication system, and more particularly, to a method and an apparatus for performing beam recovery in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for performing beam recovery in a wireless communication system.

An additional technical object of the present disclosure is to provide a method and an apparatus for performing beam recovery for a plurality of cells and/or a plurality of TRPs in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for performing beam failure recovery (BFR) by a user equipment (UE) in a wireless communication system according to an additional aspect of the present disclodure may comprise: identifying a first control resource set (CORESET) pool and a second CORESET pool based on configuration information; based on detecting beam failure for a spatial parameter associated with the first CORESET pool, transmitting a physical random access channel (PRACH) for the BFR based on a spatial parameter associated with the second CORESET pool; receiving a response to the PRACH based on the spatial parameter associated with the second CORESET pool; transmitting a MAC-CE for the BFR based on the spatial parameter associated with the second CORESET pool; and receiving a response to the MAC-CE based on the spatial parameter associated with the second CORESET pool.

A method for performing beam failure recovery (BFR) by a base station in a wireless communication system according to an aspect of the present disclosure may comprise: based on detecting beam failure for a spatial parameter associated with the first CORESET pool, receiving a physical random access channel (PRACH) for the BFR based on a spatial parameter associated with the second CORESET pool; transmitting a response to the PRACH based on the spatial parameter associated with the second CORESET pool; receiving a MAC-CE for the BFR based on the spatial parameter associated with the second CORESET pool; and transmitting a response to the MAC-CE based on the spatial parameter associated with the second CORESET pool.

[Technical Effects]

According to the present disclosure, a method and an apparatus for performing beam recovery in a wireless communication system may be provided.

According to the present disclosure, a method and an apparatus for performing beam recovery for a plurality of cells and/or a plurality of TRPs in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a multiple TRP transmission scheme in a wireless communication system to which the present disclosure may be applied.
FIG. 8 is a diagram for explaining a signaling process according to an embodiment of the present disclosure.
FIG. 9 illustrates the operation of a UE according to a method of performing a beam recovery procedure according to an embodiment of the present disclosure.
FIG. 10 illustrates base station/network operation according to a method of performing a beam recovery procedure according to an embodiment of the present disclosure.
FIG. 11 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

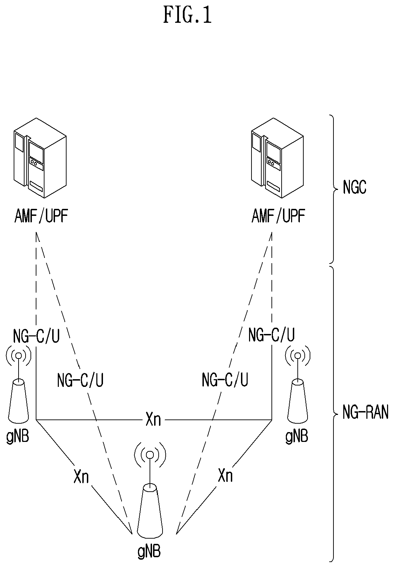

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

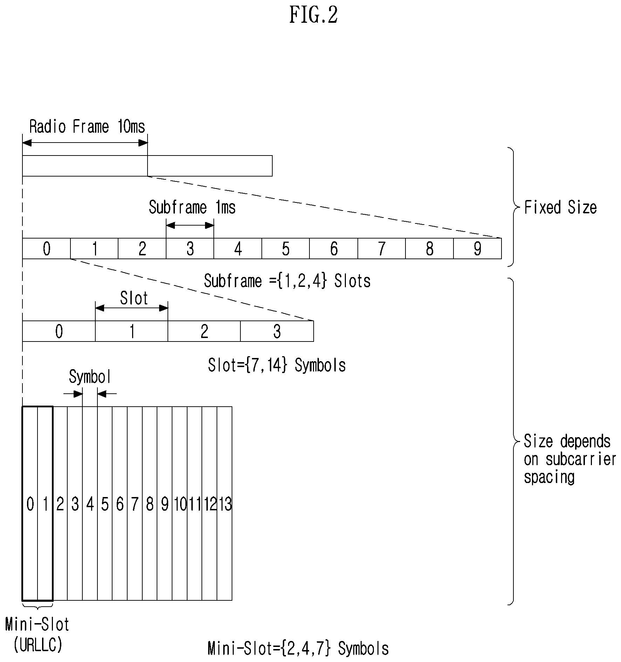

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |

(continued)

| μ | $\Delta f = 2^{\mu} \cdot 15$ [kHz] | CP |
|---|---|---|
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_t = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,u}-1\}$ in a subframe and are numbered in an increasing order of $n_{s,f}^{\mu} \in \{0,..., N_{slot}^{frame,u}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe, \mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL (quasi co-located or quasi co-location) relationship. In this case, the large-scale property includes at least one of delay spread, doppler spread, frequency shift, average received power, received timing.

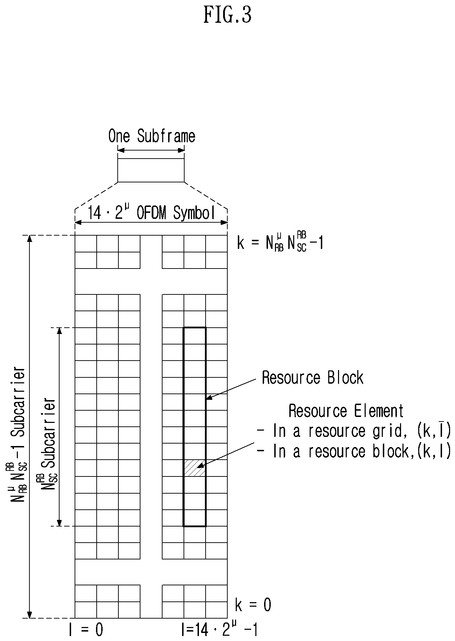

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

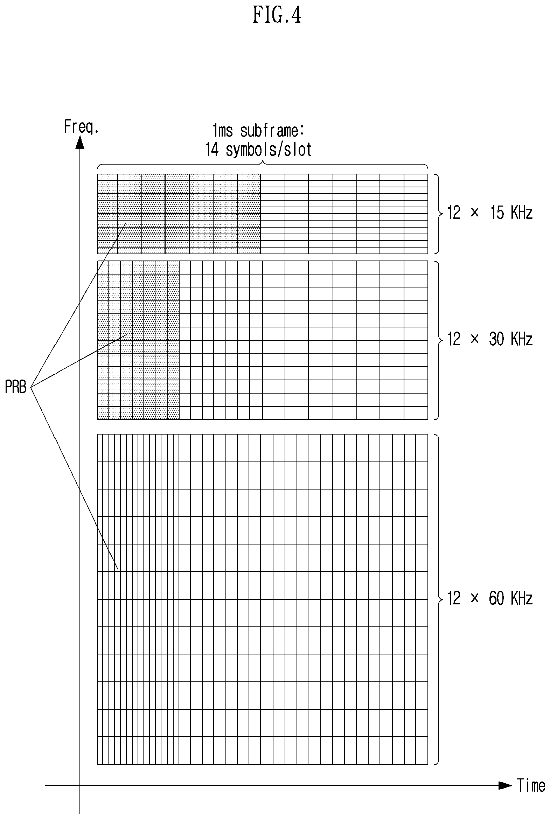

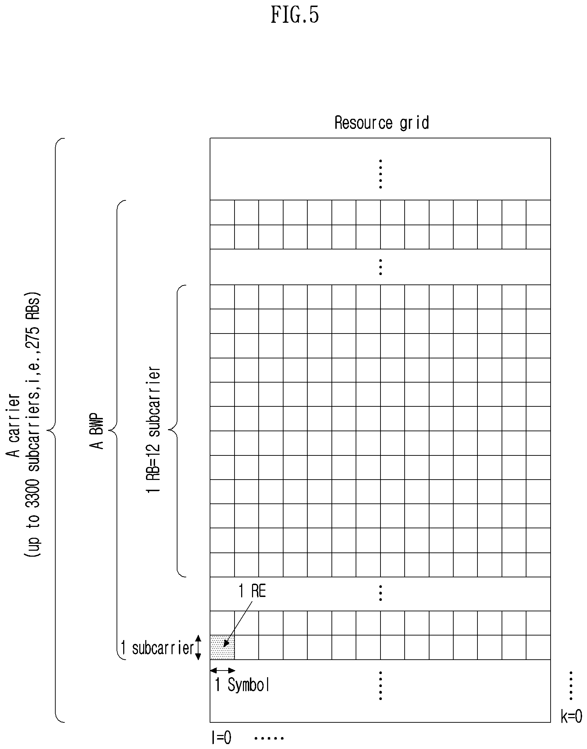

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC) . If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

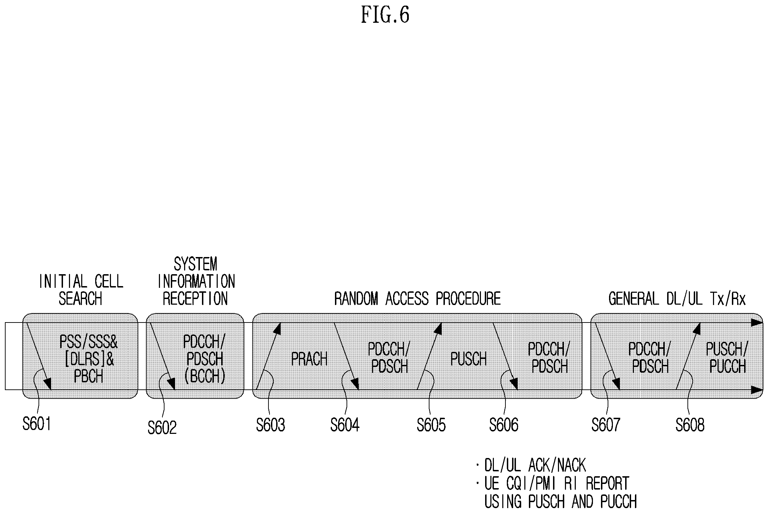

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

Beam measurement: An operation that a base station or a UE measures a property of a received beamformed signal

Beam determination: An operation that a base station or a UE selects its Tx beam / Rx beam

Beam sweeping: An operation that a spatial region is covered by using a Tx and/or Rx beam for a certain time interval in a pre-determined method

Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, a DL BM procedure will be described.

A DL BM procedure may include (1) transmission of beamformed DL RSs (reference signals) of a base station (e.g., a CSI-RS or a SS Block(SSB)) and (2) beam reporting of a terminal.

Here, beam reporting may include preferred DL RS ID(identifier)(s) and corresponding L1-RSRP(Reference Signal Received Power).

The DL RS ID may be a SSBRI(SSB Resource Indicator) or a CRI(CSI-RS Resource Indicator).

Downlink beam management may be performed based on at least one of SSB or CSI-RS. In addition, in downlink beam management, the terminal may determine a reception beam based on at least one of SSB and CSI-RS, and the base station may determine a transmission beam based on the best beam selected by the terminal and quality information thereof. In addition, for resource allocation in the time and frequency domains related to the downlink beam management operation, for example, QCL-related RS information for the NZP CSI-RS may be configured or indicated based on the TCI state.

Hereinafter, uplink beam management will be described.

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS(Sounding Reference Symbol) resource sets configured by (a higher layer parameter) SRS-ResourceSet (through higher layer signaling, RRC signaling, etc.) For each SRS resource set, a UE may be configured with $K \geq 1$ SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

When HARQ-ACK corresponding to a PDSCH carrying an activation command is transmitted in a slot n, mapping indicated between a TCI state and a codepoint of a DCI field 'Transmission Configuration Indication' may be applied by starting from a slot $n+3N_{slot}^{subframe,\mu}+1$. After UE receives an initial higher layer configuration for TCI states before receiving an activation command, UE may assume for QCL-TypeA, and if applicable, for QCL-TypeD that a DMRS port of a PDSCH of a serving cell is quasi-colocated with a SS/PBCH block determined in an initial access process.

When a higher layer parameter (e.g., tci-PresentInDCI) indicating whether there is a TCI field in DCI configured for UE is set to be enabled for a CORESET scheduling a PDSCH, UE may assume that there is a TCI field in DCI format 1_1 of a PDCCH transmitted in a corresponding CORESET. When tci-PresentInDCI is not configured for a CORESET scheduling a PDSCH or when a PDSCH is scheduled by DCI format 1_0 and a time offset between reception of DL DCI and a corresponding PDSCH is equal to or greater than a predetermined threshold (e.g., timeDurationForQCL), in order to determine a PDSCH antenna port QCL, UE may assume that a TCI state or a QCL assumption for a PDSCH is the same as a TCI state or a QCL assumption applied to a CORESET used for PDCCH transmission. Here, the predetermined threshold may be based on reported UE capability.

When a parameter tci-PresentInDCI is set to be enabled, a TCI field in DCI in a scheduling CC (component carrier) may indicate an activated TCI state of a scheduled CC or a DL BWP. When a PDSCH is scheduled by DCI format 1_1, UE may use a TCI-state according to a value of a 'Transmission Configuration Indication' field of a detected PDCCH having DCI to determine a PDSCH antenna port QCL.

When a time offset between reception of DL DCI and a corresponding PDSCH is equal to or greater than a predetermined threshold (e.g., timeDurationForQCL), UE may assume that a DMRS port of a PDSCH of a serving cell is quasi-colocated with RS(s) in a TCI state for QCL type parameter(s) given by an indicated TCI state.

When a single slot PDSCH is configured for UE, an indicated TCI state may be based on an activated TCI state of a slot having a scheduled PDSCH.

When multiple-slot PDSCHs are configured for UE, an indicated TCI state may be based on an activated TCI state of a first slot having a scheduled PDSCH and UE may expect that activated TCI states across slots having a scheduled PDSCH are the same.

When a CORESET associated with a search space set for cross-carrier scheduling is configured for UE, UE may expect that a tci-PresentInDCI parameter is set to be enabled for a corresponding CORESET. When one or more TCI states are configured for a serving cell scheduled by a search space set including QCL-TypeD, UE may expect that a time offset between reception of a PDCCH detected in the search space set and a corresponding PDSCH is equal to or greater than a predetermined threshold (e.g., timeDurationForQCL).

For both of a case in which a parameter tci-PresentInDCI is set to be enabled and a case in which tci-PresentInDCI is not configured in a RRC connected mode, when a time offset between reception of DL DCI and a corresponding PDSCH is less than a predetermined threshold (e.g., timeDurationForQCL), UE may assume that a DMRS port of a PDSCH of a serving cell is quasi-colocated with RS(s) for QCL parameter(s) used for PDCCH QCL indication of a CORESET associated with a monitored search space having the lowest CORESET-ID in the latest slot where one or more CORESETs in an activated BWP of a serving cell is monitored by UE.

In this case, when QCL-TypeD of a PDSCH DMRS is different from QCL-TypeD of a PDCCH DMRS and they are overlapped in at least one symbol, UE may expect that reception of a PDCCH associated with a corresponding CORESET will be prioritized. It may be also applied to intra-band CA (carrier aggregation) (when a PDSCH and a CORESET exist in a different CC). When any of configured TCI states does not include QCL-TypeD, a different QCL assumption may be obtained from TCI states indicated for a scheduled PDSCH, regardless of a time offset between reception of DL DCI and a corresponding PDSCH.

For a periodic CSI-RS resource of configured NZP-CSI-RS-ResourceSet including a higher layer parameter trs-Info, UE may expect a TCI state to indicate one of the following QCL type (s) .

- QCL-TypeC with a SS/PBCH block, and if applicable, QCL-TypeD with the same SS/PBCH block, or

- QCL-TypeC with a SS/PBCH block, and if applicable, QCL-TypeD with a CSI-RS resource in configured NZP-CSI-RS-ResourceSet including a higher layer parameter repetition

For an aperiodic CSI-RS resource of configured NZP-CSI-RS-ResourceSet including a higher layer parameter trs-Info, UE may expect a TCI state to indicate QCL-TypeA with a periodic CSI-RS resource of NZP-CSI-RS-ResourceSet including a higher layer parameter trs-Info, and if applicable, QCL-TypeD with the same periodic CSI-RS resource.

For a CSI-RS resource of NZP-CSI-RS-ResourceSet configured without a higher layer parameter trs-Info and without a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a SS/PBCH block, or

QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
when QCL-TypeD is not applicable, QCL-TypeB with a CSI-RS resource in configured NZP-CSI-RS-ResourceSet including a higher layer parameter trs-Info.

For a CSI-RS resource of configured NZP-CSI-RS-ResourceSet including a higher layer parameter repetition, UE may expect a TCI state to indicate one of the following QCL type(s) .

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
QCL-TypeC with a SS/PBCH block, and if applicable, QCL-TypeD with the same SS/PBCH block.

For a DMRS of a PDCCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or

QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

For a DMRS of a PDSCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
- QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, multiple DCI based non-coherent joint transmission (NCJT)/single DCI based NCJT will be described.

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Multiple TRPs (MTRPs) performing NCJT transmission may transmit DL data to a terminal by using any one scheme of the following two schemes.

First, 'a single DCI based MTRP scheme is described. MTRPs cooperatively transmit one common PDSCH and each TRP participating in cooperative transmission spatially partitions and transmits a corresponding PDSCH into different layers (i.e., different DMRS ports) by using the same time frequency resource. Here, scheduling information on the PDSCH is indicated to UE through one DCI and which DMRS (group) port uses which QCL RS and QCL type information is indicated by the corresponding DCI (which is different from DCI indicating a QCL RS and a type which will be commonly applied to all DMRS ports indicated as in the existing scheme). In other words, M TCI states may be indicated through a TCI(Transmission Configuration Indicator) field in DCI (e.g., for 2 TRP cooperative transmission, M=2) and a QCL RS and a type may be indicated by using M different TCI states for M DMRS port group. In addition, DMRS port information may be indicated by using a new DMRS table.

Next, 'a multiple DCI based MTRP scheme' is described. Each of MTRPs transmits different DCI and PDSCH and (part or all of) the corresponding PDSCHs are overlapped each other and transmitted in a frequency time resource. Corresponding PDSCHs may be scrambled through a different scrambling ID (identifier) and the DCI may be transmitted through a CORESET belonging to a different CORESET group. (Here, a CORESET group may be identified by an index defined in a CORESET configuration of each CORESET. For example, when index = 0 is configured for CORESETs 1 and 2 and index = 1 is configured for CORESETs 3 and 4, CORESETs 1 and 2 are CORESET group 0 and CORESET 3 and 4 belong to a CORESET group 1. In addition, when an index is not defined in a CORESET, it may be construed as index=0) When a plurality of scrambling IDs are configured or two or more CORESET groups are configured in one serving cell, a UE may notice that it receives data according to a multiple DCI based MTRP operation.

Alternatively, whether of a single DCI based MTRP scheme or a multiple DCI based MTRP scheme may be indicated to UE through separate signaling. In an example, for one serving cell, a plurality of CRS (cell reference signal) patterns may be indicated to UE for a MTRP operation. In this case, PDSCH rate matching for a CRS may be different depending on a single DCI based MTRP scheme or a multiple DCI based MTRP scheme (because a CRS pattern is different).

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

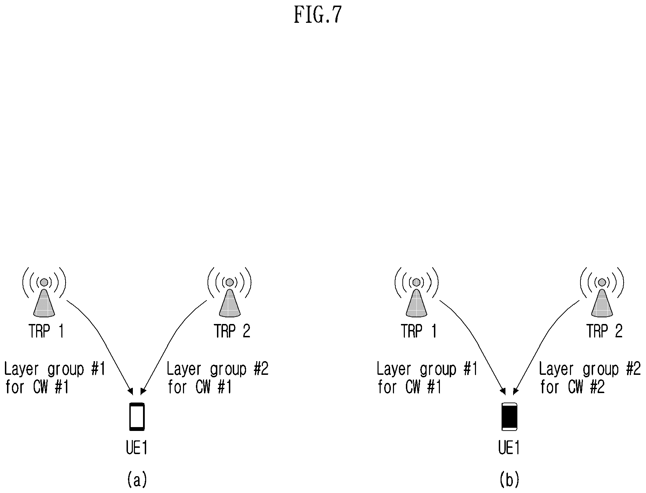

FIG. 7 illustrates a method of multiple TRPs transmission in a wireless communication system to which the present disclosure may be applied.

In reference to FIG. 7 (a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7 (a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule.

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

- The same TB having one DMRS port associated with multiple TCI state indexes is transmitted in one layer at one transmission time (occasion) or the same TB having multiple DMRS ports one-to-one associated with multiple TCI state indexes is transmitted in one layer.

In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.
- The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- All transmission time (occasion) across K slots uses a common MCS with a single or multiple DMRS port(s).

A RV/TCI may be the same or different at a different transmission time (occasion).

Hereinafter, MTRP URLLC will be described.

In the present disclosure, DL MTRP URLLC means that multiple TRP transmit the same data (e.g., the same TB) /DCI using different layers/time/frequency resources. For example, TRP 1 transmits the same data/DCI in resource 1, and TRP 2 transmits the same data/DCI in resource 2. A UE configured for the DL MTRP-URLLC transmission method receives the same data/DCI using different layer/time/frequency resources. At this time, the UE is configured from the base station which QCL RS/type (i.e., DL TCI state) to use in the layer/time/frequency resource for receiving the same data/DCI. For example, when the same data/DCI is received in resource 1 and resource 2, a DL TCI state used in resource 1 and a DL TCI state used in resource 2 may be configured. Since the UE receives the same data/DCI through resource 1 and resource 2, high reliability can be achieved. This DL MTRP URLLC may be applied to PDSCH/PDCCH.

And, in the present disclosure, UL MTRP-URLLC means that multiple TRP receive the same data/uplink control information (UCI) from one UE by using different layer/time/frequency resources. For example, TRP 1 receives the same data/DCI from the UE in resource 1, and TRP 2 receives the same data/DCI from the UE in resource 2, and then the received data/DCI will be shared through a backhaul link connected between TRPs. The UE configured with the UL MTRP-URLLC transmission scheme transmits the same data/UCI using different layer/time/frequency resources. In this case, the UE is configured by the base station which Tx beam and which Tx power (i.e., UL TCI state) to use in the layer/time/frequency resource for transmitting the same data/UCI. For example, when the same data/UCI is transmitted in resource 1 and resource 2, a UL TCI state used in resource 1 and a UL TCI state used in resource 2 may be configured. This UL MTRP URLLC may be applied to PUSCH/PUCCH.

In addition, in the present disclosure, the meaning of using (or mapping) a specific TCI state (or TCI) when receiving data/DCI/UCI for a certain frequency/time/space resource (layer) is as follows. In the case of DL, it may mean that the channel is estimated from the DMRS by using the QCL type and QCL RS indicated by the TCI state in the frequency/time/spatial resource (layer), and data/DCI is received/demodulated based on the estimated channel. In addition, in the case of UL, it may mean that DMRS and data/UCI are transmitted/modulated using the Tx beam and/or power indicated by the corresponding TCI state in the frequency/time/space resource.

Here, the UL TCI state contains Tx beam and/or Tx power information of the UE, and may be configured to the UE through other parameters such as spatial relation info instead of the TCI state. The UL TCI state may be directly indicated by the UL grant DCI or may mean spatial relation information of the SRS resource indicated through the SRI (sounding resource indicator) field of the UL grant DCI. Or UL TCI state may mean an open loop (OL) transmission power control parameter (OL Tx power control parameter) connected to a value indicated through the SRI field of the UL grant DCI (e.g., j: open loop parameters Po and alpha (maximum per cell) index for 32 parameter value sets), q_d: index of DL RS resource for PL (pathloss) measurement (up to 4 measurements per cell), l: closed loop power control process index (up to 2 per cell) processes)).

Hereinafter, MTRP eMBB will be described.

In the present disclosure, MTRP-eMBB means that multiple TRP transmits different data (e.g., different TB) using different layer/time/frequency. It is assumed that the UE configured with the MTRP-eMBB transmission method is indicated by several TCI states by DCI, and data received using the QCL RS of each TCI state are different data.

On the other hand, whether the MTRP URLLC transmission/reception or the MTRP eMBB transmission/reception is performed may be determined by the UE by separately using the RNTI for MTRP-URLLC and the RNTI for MTRP-eMBB. That is, when CRC masking of DCI is performed using RNTI for URLLC, the UE regards URLLC transmission, and when CRC masking of DCI is performed using RNTI for eMBB, the UE regards eMBB transmission. Alternatively, the base station may configure MTRP URLLC transmission/reception to the UE or TRP eMBB transmission/reception through other new signaling.

In the description of the present disclosure, it is described assuming cooperative transmission/reception between 2 TRPs for convenience of description, but the method proposed in the present disclosure may be extended and applied even in three or more multi-TRP environments and may be extended and applied to the multi-panel environment (that is, by matching the TRP to the panel). In addition, different TRPs may be recognized by the UE as different TCI states.

Therefore, the UE receiving/transmitting data/DCI/UCI using TCI state 1 means that it receives/transmits data/DCI/UCI from/to TRP 1.

Regarding Beam failure recovery

In performing a DL/UL BM procedure, a beam mismatch problem may occur according to a configured BM period/cycle. In particular, when the radio channel environment changes due to the movement or rotation of the UE, or movement of a nearby object (e.g., changing to a non-LoS environment as a beam is blocked in a LoS environment), an optimal DL/UL beam pair may change.

Regarding this change, a beam failure event may occur when beam tracking in a BM procedure generally performed by a network indication fails. Whether a corresponding beam failure event has occurred may be determined by the UE through the reception quality of the downlink RS, and a report message for this situation or a message for requesting beam recovery (hereinafter, referred to as a beam failure recovery request (BFRQ) message) needs to be transmitted from the UE. The base station receiving the BFRQ message may perform beam recovery through various processes such as beam RS transmission and beam report request for beam recovery. This overall beam recovery process is referred to as beam failure recovery (BFR).

In the Rel-15 NR standardization, a BFR procedure for a PCell or PScell (hereinafter, a special cell (SpCell) collectively refers to a PCell and a PScell) in which a contention based PRACH resource is always present has been agreed. The corresponding BFR procedure is an operation in a serving cell, and includes a beam failure detection (BFD) procedure and a BFRQ process of the UE, and a procedure in which the UE monitors the response of the base station to the BFRQ.

(BFD procedure)

When all PDCCH beams fall below a predetermined quality value (Q_out), it is recognized that one beam failure instance has occurred. Here, the quality is based on a hypothetical block error rate (BLER), that is, a probability of failing to demodulate the information when it is assumed that the control information is transmitted through the corresponding PDCCH.

Here, one or a plurality of search spaces to monitor the PDCCH may be configured for the UE, and a different beam may be configured for each search space. Corresponding beams may mean all PDCCH beams, and at this time, BFD is determined according to whether all beams fall below the BLER threshold.

The following two methods are supported as criteria for determining the BFD RS by the UE.

First, implicit configuration for BFD RS is considered. a control resource set (CORESET) ID, which is a resource area in which PDCCH may be transmitted, may be configured on each search space, and QCL RS information (e.g., CSI-RS resource ID, SSB ID) from the perspective of spatial RX parameters may be indicated/configured for each CORESET ID,. In the case of NR, the QCL RS may be indicated/configured through a transmit configuration information (TCI) indication. Here, the QCLed RS from the perspective of the spatial RX parameter means a method for the base station to inform that the UE uses (or may use) the beam used for receiving the spatially QCLed RS as it is when receiving the corresponding PDCCH DMRS. That is, from the perspective of the base station, the QCL RS is a method of informing the UE that the same transmission beam or a similar transmission beam (e.g., beam direction is the same/similar but the beam width is different) will be applied and transmitted between spatially QCLed antenna ports.

Next, explicit configuration for BFD RS is considered. The base station may explicitly configure beam RS(s) for the above-described beam failure detection (BFD) purpose(/usage), and in this case, the corresponding beam RS(s) corresponds to the above-described 'all PDCCH beams'.

The UE may inform the MAC sublayer that a 'beam failure instance (BFI)' has occurred whenever an event in which the hypothetical BLER measured based on the BFD RS (s) in the physical layer deteriorates beyond a certain threshold value occurs. The UE determines that a beam failure has occurred and initiates a related RACH operation when BFI occurs within a certain time (e.g., BFD timer) and a certain number of times (e.g., beamFailureInstanceMax-Count) in the MAC sublayer.

Table 6 shows an example of MAC sublayer operation related to BFD in the NR system.

[Table 6]

| The MAC entity shall: |
|---|
| 1> if beam failure instance indication has been received from lower layers: |
| 2> start or restart the *beamFailureDetectionTimer*; |
| 2> increment *BFI_COUNTER* by 1; |
| 2> if *BFI_COUNTER* >= *beamFailureInstanceMaxCount*: |
| 3> initiate a Random Access procedure on the SpCell. |
| 1> if the *beamFailureDetectionTimer* expires; or |
| 1> if *beamFailureDetectionTimer*, *beamFailureInstanceMaxCount*, or any of the reference signals used for beam failure detection is reconfigured by upper layers: |
| 2> set *BFI_COUNTER* to 0. |
| 1> if the Random Access procedure is successfully completed: |
| 2> set *BFI_COUNTER* to 0; |
| 2> stop the *beamFailureRecoveryTimer*, if configured; |
| 2> consider the Beam Failure Recovery procedure successfully completed. |

(BFRQ procedure)

As described above, when a certain number of BFIs occur, the UE may determine that a beam failure (BF) has occurred and perform a beam failure recovery (BFR) operation. As an example of the BFR operation, a beam failure recovery request (BFRQ) operation based on a RACH procedure (i.e., PRACH) may be performed. The BFRQ procedure will be described in detail below.

The base station may configure an RS list corresponding to candidate beams that can be replaced when BF occurs in the corresponding UE (e.g., candidateBeamRSList) through RRC, and dedicated PRACH resource(s) may be configured for the corresponding candidate beams. Here, the dedicated PRACH resource is configured as a non-contention based PRACH (i.e., contention free PRACH) resource. If the UE may not find a beam in the corresponding RS list, the UE selects a specific SSB resource among pre-configured SSB resources and transmits a contention based PRACH. In the corresponding BFRQ procedure, new beam identification and PRACH (i.e., BFR-PRACH) transmission may be performed. Here, in relation to identification of a new beam, information on a new beam RS (set) may be reported to the base station through the aforementioned PRACH transmission.

In the PRACH-based BFR procedure agreed upon in the Rel-15 NR standardization as described above, in the case of carrier aggregation (CA), some SCell may not have a UL carrier, and due to technical limitations in which contention based PRACH cannot be configured even when a UL carrier exists, it is limitedly applied only to PCell or PSCell (i.e., SPcell). In particular, when a network operates a PCell in a low frequency band (e.g., below 6 GHz) and operates a high frequency band (e.g., 30 GHz) as an SCell, the network cannot support BFR in a high frequency band where BFR is required.

Accordingly, a method of supporting BFR for SCell in Rel-16 NR standardization was discussed. The base station configures (dedicated) PUCCH resource(s) in the SpCell for a beam failure recovery request (BFRQ) of the terminal, and the UE may perform BFRQ for the SCell using the corresponding PUCCH resource(s). Hereinafter, for convenience of description, the corresponding PUCCH is referred to as a BFR-PUCCH.

As described above, the role of the standardized BFR-PRACH in Rel-15 is to transmit 'BF generation and new beam RS (set) information' together to the base station. The role of BFR-PUCCH informs only 'BF occurrence for SCell(s)', and the UE may report which SCell(s) BF has occurred (e.g., Component Carrier (CC) index(s)), hether a new beam exists for the corresponding SCell(s), and a RS ID for the corresponding beam if a new beam exists to the base station through a MAC-CE for subsequent BFR purposes (hereinafter, BFR MAC-CE).

The corresponding BFR-PUCCH uses the same PUCCH format as a scheduling request (SR), and may be defined by assigning a specific SR ID for BFR purposes. If there is a pre-allocated UL-SCH from the base station when the UE detects the BF for the SCell, the UE may skip the BFR-PUCCH transmission procedure like the SR procedure and transmit the BFR MAC-CE through the pre-allocated UL-SCH.

Beam failure recovery for multiple cells and/or multiple TRPs

Hereinafter, various examples of the present disclosure for performing a beam failure recovery procedure for multiple cells and/or multiple TRPs in a wireless communication system supporting transmission and reception for multiple cells will be described.

In the present disclosure, '/' means 'and', 'or', or 'and/or' depending on the context.

In the present disclosure, a QCL type-D RS may mean a spatial parameter, that is, a QCL reference RS in perspective of a beam. The QCL type-D RS may be interpreted as being extended as a reference RS for the corresponding parameter or other beam/spatial-related parameters. In addition, the indication of the QCL type-D RS may be omitted in an environment where analog beamforming is not used, such as in a low frequency band. In this case, the QCL type-D RS in the present disclosure may be interpreted as a QCL reference RS. That is, when there is only one reference RS in the TCI state, the QCL type-D RS may refer to the corresponding RS.

In the present disclosure, 'RS for which a specific cell ID is configured' or 'RS associated with a specific cell ID' may mean an RS whose corresponding cell ID is used to generate a sequence of the corresponding RS (e.g., sequence initialization). Additionally/alternatively, 'RS for which a specific cell ID is configured' or 'RS associated with a specific cell ID' is an RS configured as separate information for the corresponding cell ID (e.g., physical cell ID (PCI)) (e.g. neighbor-cell RS for mobility, SSB from non-serving cell, etc.).

Regarding Radio Link Monitoring (RLM) in a wireless communication system, when a Radio Link Failure (RLF) occurs in a UE, an RRC re-establishment procedure may be performed. This may correspond to a case where there is no SpCell (PCell or PSCell) normally operating in a DC (dual connectivity) situation. Hereinafter, the methods described in the present disclosure are mainly described for a beam failure recovery (BFR) procedure, but may be extended and applied to an RLM procedure in multi-TRP (multi-TRP, M-TRP).

In Rel-17 FeMIMO (Further enhanced MIMO) standardization, BFR operation for multiple TRPs (i.e., a plurality of TRPs) has been discussed. The corresponding BFR operation method is a method that be applicable to multiple TRPs operating with the same cell ID (e.g., PCI). In addition, in the case of the corresponding BFR operation method, it is assumed that the DL/UL synchronization value does not change according to the TRP change. As a specific example, in the case of DL, the BFR operating method is designed on the assumption that the FFT window (or symbol start/end timing) is not different for each TRP, and in the case of UL, even if the TRP is changed, the BFR operating method is being designed assumung that a timing advance (TA) value does not change. This method may be effective in a relatively low frequency band where the distance difference between the UE and each TRP is not severe and/or a symbol having a long CP (cyclic prefix) length is used. In addition, transmission and reception timings between TRPs need to be synchronized.

In order to overcome the limitations described above, in the present disclosure, an mTRP BFR scheme will be proposed in an environment in which synchronization between TRPs may be different (e.g., an environment in which the distance difference between the UE and the TRP is large, an asynchronous environment between TRPs, and a high-frequency band transmission environment etc.) and/or in an environment in which each TRP operates as a different cell. Hereinafter, the mTRP operation may be an operation for the same component carrier (CC) and/or bandwidth part (BWP), and the same or different set of TRP(s) may perform transmission and reception for a plurality of CCs and/or BWPs.

For example, an intra-cell mTRP BFR scheme may proceed according to the following steps.

Step 1) The UE performs TRP-specific BFD detection.

The base station (or network) may configure the BFD RS for the UE, and the UE may determine BF for each TRP according to the configuration. Here, the BFD RS configuration may be configured explicitly, such as two BFD RS sets, or implicitly configured, such as determined by the TCI state per CORESET pool.

Step 2) When BFD occurs, the UE performs TRP-specific BFRQ.

The base station may configure SR PUCCH resources as BFRQ resources, and the UE may perform SR PUCCH transmission through the configured BFRQ SR PUCCH resources when BF for a specific TRP occurs. Here, the base station may configure a separate SR PUCCH resource for each TRP or configure the same SR PUCCH resource to be used together for two TRPs (e.g., in the case of SCell BFR, PUCCH configuration with multiple spatial relations). In this case, the UE may be configured to transmit the SR PUCCH through a TRP in which BF does not occur, that is, a non-beam-failure TRP.

Step 3) The UE receives a BFRQ response from the network (or base station).

Upon receiving the BFRQ in step 2), the TRP may transmit a UL grant DCI to the corresponding UE. For example, a CORESET pool or CORESET group of the same CC/BWP is separately configured and used for each TRP, and at this time, a method of transmitting the UL grant DCI through the corresponding CORESET pool/group may be applied.

Step 4) The UE performs BFR MAC-CE transmission.

The UE may transmit the BFR MAC-CE through the PUSCH allocated by the response in step 3). Here, the BFR MAC-CE may include the failed CC ID, new beam information, and new beam RS ID, and additionally, include information on the failed TRP ID (e.g., CORESET pool/group ID, BFD RS set ID, etc.).

Step 5) The UE receives a MAC-CE response from the network (or base station).

Upon receiving the BFR MAC-CE in step 4), the TRP may notify the UE through the DCI that the corresponding message was normally received. For example, DCI transmitted during successful PUSCH decoding may be used (e.g., DCI with same HARQ ID, NDI toggled).

Step 6) The UEterminal resets to a new beam.

After receiving the DCI in step 5), after a certain period of time (e.g., 28 symbols), the UE may reset the PDCCH/PUCCH beam (e.g., QCL type-D, TCI state, spatial relation) for the TRP where BF occurred by replacing it with a new beam RS of the TRP selected and reported by the UE.

In the present disclosure, referring to the above-described intra-cell mTRP BFR scheme, a new BFR method applicable to inter-cell mTRP and/or asynchronous mTRP is proposed.

Hereinafter, in the present disclosure, in a plurality of TRP operations, the TRP with which the UE is currently synchronized, the TRP with which control information (and data) is transmitted and received, the TRP with which important information such as system information is transmitted, and/or the TRP corresponding to the serving cell is referred to as a primary TRP (hereinafter referred to as P-TRP), and the other TRP(s) is referred to as a secondary TRP (hereinafter referred to as S-TRP). The S-TRP may operate in the same or different cell as the P-TRP.

For example, P-TRP and S-TRP may be distinguished in perspectives of synchronization and/or specific identification information (e.g., method 1 and/or method 2 described below). In perspectives of synchronization, P-TRP refers to a TRP corresponding to a BFD RS / TCI state / beam (set) received by applying DL / UL synchronization that is (mainly) maintained / applied by the UE, and S-TRP refers to a TRP corresponding to the BFD RS / TCI state / beam (set) received by applying a value independent of the DL / UL synchronization that is (mainly) maintained / applied by the UE (e.g., a different value). Alternatively, in perspectives of specific identification information, the same synchronization value is applied to P-TRP and S-TRP, but they may be distinguished using specific identification information (e.g. ID) (by explicit indication method and/or implicit indication method).

And/or, P-TRP and S-TRP may be distinguished in perspectives of BFR operation. For example, the UE may be configured to perform beam failure detection (BFD) only for P-TRP. As another example, the UE may perform BFD for each of P-TRP and S-TRP (e.g., similar to mTRP BFR in Rel-17), but may perform other subsequent procedures for P-TRP BF and S-TRP situations. Specifically, for the P-TRP BF situation, a recovery procedure with a new beam (i.e., BFR) may be performed, but for the S-TRP BF situation, only the BF situation of the corresponding TRP may be notified to the base station and the beam recovery procedure (i.e., BFR) may not perform.

In relation to the classification of the above-described aspect of specific identification information, signaling for distinguishing P-TRP and S-TRP may be the same as the following examples.

(Method 1. Classification according to the explicit indication method)

P-TRP and S-TRP may be distinguished based on an explicit indication method according to at least one of the following examples.

For example, the base station may indicate to the UE which CORESET pool corresponds to the P-TRP or the S-TRP through CORESET pool index configuration. As a specific example, the base station may explicitly configure/indicate the UE that CORESET pool index 0 corresponds to P-TRP and CORESET pool index 1 corresponds to S-TRP.

For another example, the base station may indicate to the UE which TCI/RS (state/resource) (group/set) index(s) corresponds to the P-TRP or the S-TRP. As a specific example, a method of simultaneously managing a plurality of DL / UL TCI states according to a unified TCI state method may be considered. In this case, the UE my be indicated as to which TCI state among the plurality of DL/UL TCI states (pool and/or process) corresponds to P-TRP or S-TRP. As another specific example, a specific BFD RS (set) may be designated and set as P-TRP.

For another example, the base station may indicate to the UE whether the corresponding index corresponds to P-TRP or S-TRP through an index related to DL/UL synchronization. As a specific example, when two (or more) Timing Advances (TAs) are considered, the indexes for each TA value (e.g., TAG index, TA-subgroup index, etc.) for each associated DL/UL channel/signal may be defined. In this case, the base station may indicate to the UE which index corresponds to the P-TRP or the S-TRP through the index for the corresponding TA value.

For another example, the base station may indicate to the UE whether it corresponds to the P-TRP or the S-TRP through the UE panel-related index. Here, the UE panel-related index may be an index related to UE capability (e.g., a UE capability value index introduced in Rel-17 standardization).

For another example, the base station may indicate to the UE whether it corresponds to P-TRP or S-TRP through cell identification information (e.g., PCI).

(Method 2. Classification according to implicit indication method)

P-TRP and S-TRP may be distinguished based on an implicit indication method according to at least one of the following examples.

For example, a specific CORESET pool index is configured to correspond to P-TRP, and the UE may be configured to recognize/identify the remaining CORESET pool indexes as corresponding to P-TRP. As a specific example, CORESET pool index 0 may be configured/defined as corresponding to P-TRP, or CORESET pool index including (specific) CSS (type) may be configured/defined as corresponding to P-TRP. In this case, the UE may receive a configuration/indication for the CORESET pool from the base station and may recognize whether it corresponds to P-TRP or S-TRP by identifying/checking the CORESET pool index according to the configuration/indication.

For another example, a specific TCI/RS (state/resource) (group/set) index(s) may be configured to correspond to P-TRP, and the remaining may be configured/defined to correspond to S-TRP. As a specific example, in the above-described integrated TCI state method, the TCI state (pool/process) having the lowest index may be configured/defined as corresponding to P-TRP, and the remaining TCI states may be configured/defined as corresponding to S-TRP. In this case, the UE may receive a configuration/indication for the TCI/RS (state/resource) (group/set) index(s) from the base station, and may recognize whether it corresponds to P-TRP or S-TRP by identifying/checking the TCI state according to the configuration/indication.

For another example, a specific index related to DL/UL synchronization may be configured to correspond to P-TRP, and the remaining may be configured/defined to correspond to S-TRP. As a specific example, the first/lowest TAG index (for the same CC/BWP) may be configured to correspond to P-TRP, or the index corresponding to the TA currently (or most recently) applied to UL transmission may be configured to correspond to P-TRP. In this case, the UE may receive a configuration/indication for an index related to DL/UL synchronization from the base station, and may recognize whether it corresponds to P-TRP or S-TRP by identifying/checking the index according to the configuration/indication.

For another example, a specific index related to a UE panel may be configured to correspond to P-TRP, and the remaining may be configured/defined to correspond to S-TRP. As a specific example, the first/lowest index may be configured to correspond to P-TRP, or an index currently (or most recently) applied to UL transmission may be configured to correspond to P-TRP. In this case, the UE may receive a configuration/indication for a UE panel-related index from the base station, and may recognize whether it corresponds to P-TRP or S-TRP by identifying/checking the index according to the configuration/indication.

For another example, specific cell identification information (e.g., PCI) may be configured to correspond to P-TRP, and the remaining may be configured/defined to correspond to S-TRP. As a specific example, a signal/channel corresponding to the same PCI as the PCI of the serving cell (i.e., PCI obtained by the synchronization signal) and/or transmission/reception related thereto may be configured to correspond to the P-TRP, and the remaining may be configured to correspond to the S-TRP. In this case, the UE may recognize whether or not it corresponds to P-TRP or S-TRP, by acquiring information on cell identification information (e.g. PCI) from the base station, receiving the corresponding configuration/indication, and identifying/checking the corresponding information or the cell identification information according to the configuration/indication.

Hereinafter, a single S-TRP is assumed for convenience of explanation, but it goes without saying that the methods described in the present disclosure may be extended and applied even when multiple S-TRPs exist.

In multi-TRP operation (i.e., mTRP operation), the following two cases may be considered.

The UE may be able to transmit/receive control information/data for both P-TRP and S-TRP (hereinafter, Case 1). For example, transmission modes such as mTRP based on multi-DCI and/or single-DCI may be considered. In this case, the UE may be configured to perform BFD for P-TRP and S-TRP, respectively.

Alternatively, the UE may perform control information/data transmission/reception (preferentially) with the P-TRP, and the S-TRP may operate as an auxiliary TRP (hereinafter, Case 2). For example, the S-TRP may be a TRP for transmitting and receiving control information/data when a problem (e.g., BF, RLF, etc.) occurs in the P-TRP. In this case, the UE may be configured to perform BFD only for P-TRP.

Hereinafter, various examples of a BFR operation for a plurality of cells and/or a plurality of TRPs will be described.

Embodiment 1

This embodiment relates to a method of transmitting and receiving a beam failure recovery request (BFRQ) in relation to a BFR operation for a plurality of cells and/or a plurality of TRPs.

For example, when BF for P-TRP of SpCell (i.e., PCell or PsCell)/SCell occurs, the UE may perform PRACH-based BFR with S-TRP. Here, the S-TRP may be an S-TRP configured in a corresponding cell or an SpCell of a corresponding cell group. Also, the PRACH may be a dedicated PRACH for BFR usage. When the UE performs the PRACH-based BFR through the S-TRP, it may mean that the corresponding UE transmits the PRACH-based BFRQ through the S-TRP.

The above-described operation method may be particularly useful for BFR operation for SpCell's P-TRP. In the case of BFR operation for SCell's P-TRP, the above-described operation method may be applied, or according to another method, the UE may perform (dedicated) SR PUCCH-based BFR or (dedicated) PRACH-based BR for the P-TRP of SpCell.

Alternatively, in order to support both BFRQ to S-TRP and BFRQ to P-TRP, BFRQ resources for each TRP (e.g., PRACH for S-TRP, SR PUCCH for P-TRP) may be configured, respectively.

For the method proposed in this embodiment, (dedicated) PRACH resource(s) transmitted to S-TRP and/or P-TRP when a corresponding event occurs may be configured (respectively). In addition, a CORESET and/or a search space (SS) for receiving a response from the S-TRP and/or P-TRP for the corresponding PRACH may be configured/designated (respectively). And/or, SR PUCCH resources for BFR operation for P-TRP of SCell may be configured. In the method described above, the base station may not configure separate PRACH resources and/or PUCCH resources, and the UE may perform BFR using contention based PRACH.

In addition, in the above method, each PRACH resource and/or PUCCH resource may be linked/associated with a specific DL RS (i.e., DL beam). This may mean that UL transmission is performed according to the corresponding DL RS (i.e., DL beam). At this time, the PRACH resource and/or the PUCCH resource selected and transmitted by the UE may mean a new beam RS for the corresponding TRP. In this case, the BFRQ for the S-TRP and/or P-TRP that the UE selects and transmits may be defined/configured to be performed only when the DL RS linked/associated with the corresponding UL has a certain quality or higher (e.g., when the RSRP is higher than a specific threshold value) . Here, the threshold value related to the above-described quality may be commonly or individually configured by the base station for the P-TRP and the S-TRP, or may be a fixed/defined value according to a specific rule.

In the method proposed in this embodiment, a method of using PRACH for BFR operation may be considered assuming an environment in which S-TRP is asynchronous, but in a case where S-TRP is synchronous, the UE may be configured to perform a BFR operation based on SR PUCCH instead of PRACH. Here, an environment in which S-TRP is asynchronous may mean an environment in which synchronization between S-TRP and P-TRP is inconsistent/mismatch, and an environment in which S-TRP is synchronous means an environment in which synchronization between S-TRP and P-TRP is consistent/match.

In addition, when the S-TRP corresponds to a non-serving cell, the physical cell ID (PCI) of the DL RS (i.e., DL beam) linked to the PRACH resource and/or PUCCH resource for the above-described S-TRP may be different. For example, a non-serving cell SSB may be linked to PRACH resources and/or PUCCH resources for S-TRP. Here, when the S-TRP corresponds to the non-serving cell, it may mean that the P-TRP corresponds to the serving cell and the S-TRP belongs to a cell having PCI different from that of the P-TRP.

Embodiment 2

This embodiment relates to a method for transmitting and receiving a BFRQ response in relation to a BFR operation for a plurality of cells and/or a plurality of TRPs. Here, the BFRQ response may mean a response to the BFRQ transmitted by the UE in the above-described Embodiment 1.

For example, after the UE transmits the BFRQ (e.g., PRACH) through the S-TRP, in order to receive the base station response message for this, the base station may configure/designate to the UE a specific CORESET and/or search space (SS) for a serving cell or non-serving cell corresponding to the S-TRP. And/or, apart from the corresponding CORESET and/or search space (SS), when the UE transmits the BFRQ through the P-TRP, the CORESET and/or search space (SS) for receiving a response through the corresponding TRP may be configured. And/or, the corresponding CORESET and/or search space (SS) may be shared by the P-TRP and the S-TRP. That is, the UE may be configured to monitor a commonly configured CORESET and/or search space (SS) after transmitting the BFRQ through P-TRP or S-TRP.

The PDCCH for the above-described S-TRP response (i.e., BFRQ response) may use the C-RNTI of a serving cell or the C-RNTI of a non-serving cell separately configured for a cell related to the S-TRP. In addition, in the case of BFR operation based on contention based random access (CBRA), the RA-RNTI may be used for the PDCCH. Here, the RNTI may mean an RNTI for CRC check upon Blind Detection (BD) for the PDCCH.

The above-described response message (i.e., BFRQ response) may include PUSCH allocation information, power/timing control information (e.g., power control command, TA (offset) value, etc.), and/or beam information (e.g., UL TCI state, spatial relation RS, etc.). Here, the corresponding response message may be delivered to the UE through a PDCCH transmitted through the aforementioned CORESET and/or search space (SS) or a PDSCH scheduled through the corresponding PDCCH.

In the aforementioned CORESET and/or search space (SS), even if TCI information is omitted or TCI is configured (ignoring the corresponding TCI information), when the UE receives a response to the corresponding PRACH, the UE may assume that a DL RS resource configured to be linked to the corresponding PRACH is QCL type-D RS/TCI. The assumption may be maintained for subsequent DL reception through the corresponding TRP. In addition, during UL transmission, the UE may maintain the PRACH transmission beam and/or the SR PUCCH transmission beam for the corresponding TRP.

Power/timing control information and/or beam information included in the above-described response message may be information applied only to UL signals (e.g., PUSCH, PUCCH, SRS, etc.) transmitted through S-TRP. If separate beam information does not exist, the UE may be configured/defined to use the same beam as the BFRQ transmission beam for the S-TRP for UL transmission for the corresponding S-TRP. The TA information included in the above-described response message may be useful information for supporting until the TA value for S-TRP is different from the P-TRP, and the TA absolute value or previously applied TA value (or the TA value for P-TRP) may also be indicated as a differential value.

Embodiment 3

This embodiment relates to a method of transmitting and receiving BFR reporting in relation to BFR operation for a plurality of cells and/or a plurality of TRPs. Here, the BFR report may mean a BFR report based on the BFRQ response in the above-described Embodiment 2.

For example, a UE receiving a response message from a base station to a BFRQ may transmit a BFR MAC-CE through an allocated PUSCH. Here, the allocated PUSCH may be based on PUSCH resource allocation information when the BFRQ response message includes the corresponding information.

The corresponding BFR MAC-CE may include at least one of the following information.

- Information on whether P-TRP and/or S-TRP beam failure (BF)
- Information on failed CC indexes
- Information on whether a new beam was found for P-TRP and/or S-TRP (for each failed CC)
- New beam RS ID for P-TRP and/or S-TRP (for each failed CC) (can be included if new beam is found)

In the method proposed in this embodiment, the above-described new beam information may be configured/defined for both P-TRP and S-TRP, or only for one of the two TRPs. For example, in the latter case, if the UE finds a new beam for the P-TRP, the UE may be configured to omit the new beam information for the S-TRP and transmit only the new beam information for the P-TRP. Only if the UE does not find a new beam for the P-TRP, the corresponding UE may be configured to transmit new beam information (e.g., information on whether a new beam has been found and a new beam RS ID) for the S-TRP through a corresponding information field. The above-described rules may be defined for the purpose of maximally maintaining the current P-TRP as a serving TRP/cell.

In addition, when new beam information is transmitted to the base station through BFRQ PRACH (i.e., PRACH for BFRQ purpose) (especially for SpCell), the above-described BFR MAC-CE transmission procedure may be omitted. Alternatively, when PRACH resources are used as BFRQ resources for S-TRP and SR PUCCH resources are used as BFRQ resources for P-TRP, new beam information for S-TRP may be replaced with PRACH, and the BFR MAC-CE may contain only information on P-TRP. In this case, the UE may transmit the BFRQ for P-TRP failure (i.e., BF) to S-TRP, receive PUSCH resources from the corresponding S-TRP, and then transmit the BRF MAC-CE for the P-TRP through the corresponding PUSCH resources to S-TRP.

Embodiment 4

This embodiment relates to a method for transmitting and receiving a response message and/or DCI for a BFR MAC-CE in relation to a BFR operation for a plurality of cells and/or a plurality of TRPs. Here, the response message and/or DCI may mean a response based on the BFR MAC-CE in the above-described Embodiment 3.

For example, the transmission/reception method for the response message and/or DCI for the BFR MAC-CE transmitted by the UE to the S-TRP may follow one of the following options.

Option 1) S-TRP always transmits corresponding response message and/or DCI.

Option 2) S-TRP or P-TRP transmits corresponding response message and/or DCI.

In the case of option 2), for example, a TRP in which a new beam is found may be configured to transmit a corresponding response message and/or DCI to the UE. Here, the TRP in which a new beam is found may mean a TRP in which the UE finds a new beam in the BFR procedure. As another example, when the UE finds a new beam for P-TRP, the P-TRP is configured to transmit a corresponding response message and/or DCI to the UE, and when the UE does not find a new beam for P-TRP, S-TRP may be configured to transmit a corresponding response message and/or DCI to the UE. As another example, any of the two TRPs (e.g., a TRP to transmit/receive later with the corresponding UE) may be configured to transmit the corresponding response message and/or DCI to the UE. In this case, since the UE may not know from which TRP the corresponding response message and/or DCI will be transmitted, it may be configured to perform PDCCH monitoring for both TRPs.

The process proposed in this embodiment may be a step corresponding to the above-described step 5) (i.e., the step in which the UE receives a MAC-CE response from the network (or base station)), and it does not apply when the UE does not transmit the BFR MAC-CE.

In the case of option 1), similar to the method proposed in the above-described embodiment 2, a response message may be transmitted through the CORESET and/or search space (SS) for S-TRP, and the S-TRP that responded to RACH may transmit a response message.

In the case of option 2), for example, when the UE finds a new beam for P-TRP, a response message and/or DCI may be transmitted from P-TRP for fast beam recovery for P-TRP. In this case, the corresponding response message and/or DCI may be transmitted through the CORESET and/or search space (SS) for P-TRP. At this time, based on the new beam RS ID information reported through the BFR MAC-CE, the UE may receive/monitor the PDCCH assuming that P-TRP uses the corresponding RS as CORESET and/or search space (SS) transmission beam/TCI (or QCL Type-D RS). In addition, when the base station does not normally receive the BFR MAC-CE, since the DCI for reallocating the PUSCH may be transmitted through the S-TRP, the UE may be configured to monitor the response message and/or DCI for both TRPs.

Embodiment 5

This embodiment relates to a method of resetting a DL/UL beam in relation to a BFR operation for a plurality of cells and/or a plurality of TRPs. Here, the resetting of the DL/UL beam may be based on new beam information according to the response message/DCI in the above-described Embodiment 4 and/or the PRACH/BFR MAC-CE in the above-described embodiments (e.g., Embodiments 1 and 3).

For example, the UE receiving the response message/DCI may reset the DL/UL beam related to the corresponding TRP(s) using the new beam RS, for the TRP(s) reporting the new beam information through BFR MAC-CE/PRACH or the TRP transmitting the corresponding response message/DCI, after a certain period of time (e.g., 28 symbols).

For example, the method of the present embodiment may be applied to Case 2 described above (i.e., control information/data transmission/reception is performed through P-TRP, and S-TRP operates as an auxiliary TRP). As a specific example, when the UE finds a new beam for the P-TRP, the UE may reset the DL/UL beam using the new beam RS for the P-TRP. Alternatively, when the UE receives the response message/DCI from the P-TRP, the UE may reset the DL/UL beam using the new beam RS for the P-TRP, and when the UE may receive the response message/DCI from the S-TRP, the UE may reset the DL/UL beam using the new beam RS for S-TRP.

In addition, as in the examples of Case 2 described above, when the DL/UL beam is reset using the new beam RS for the S-TRP, operations, such that the existing P-TRP or related serving cell setting is disabled, or the configuration value is replaced with S-TRP related configuration value, and/or the P-TRP is converted to the S-TRP and the S-TRP is converted to the P-TRP, may be performed. The corresponding operation(s) may be automatically performed at the time of beam resetting or after a certain time, or whether to perform the corresponding operation may be separately configured/indicated by the base station.

Here, the DL beam may mean at least a TCI for PDCCH (e.g., TCI for all CORESETs for a corresponding TRP), and may be extended and applied to PDSCH and/or other DL RSs. In addition, a UL beam may mean at least a spatial relation RS for PUCCH (e.g., a spatial relation RS for all PUCCH resource(s) for a corresponding TRP), and may be extended and applied to PUSCH and/or other UL RSs..

In the procedures described in this disclosure, the procedure of the UE transmitting the BFRQ and receiving the base station response to the BFRQ may be omitted if there is an available UL-SCH for the corresponding TRP. For example, if there is a pre-configured SPS PUSCH or an allocated PSUCH for the S-TRP, the UE may skip the corresponding procedures and directly transmit the BFR MAC-CE.

In addition, when a plurality of beam RSs are linked to the same BFRQ resource, a specific beam RS to be used (by default) in BFRQ transmission (e.g., related to step 2, Embodiment 1 described above) and subsequent procedures may be configured/defined. Examples of rules for specifying/configuring a specific RS resource are as follows.

- Priority selection of SSB resources over CSI-RS resources
- Select the lowest or highest resource ID
- Designating a specific resource to be selected when the base station configures the plurality of resources

In addition, illustratively, in relation to the embodiments described above in the present disclosure (e.g., Embodiment 1, Embodiment 2, Embodiment 3, Embodiment 4, and Embodiment 5), P-TRP and S-TRP classification and operation(s) according to the related synchronization aspect or specific identification information aspect may be organized as follows.

(P-TRP and S-TRP classification cases according to synchronization aspects)

In relation to the above-described embodiment 1 (i.e., BFRQ transmission), when BF for P-TRP of SpCell is generated, the UE may transmit PRACH to S-TRP of SpCell. This may be for the UE to acquire UL synchronization for S-TRP at the same time as transmitting BFRQ. Alternatively, in this case, the UE may transmit BFRQ and/or SR PUCCH through the S-TRP of SpCell using a secondary TA. This may be premised on the case where the UE manages the TA value for the S-TRP separately from the TA for the P-TRP. Alternatively, in this case, the UE may transmit the PRACH through the P-TRP of SpCell.

In addition, in relation to the above-described embodiment 1 (i.e., BFRQ transmission), when a BF for P-TRP of SCell is generated, the UE may transmit BFRQ and/or SR PUCCH through P-TRP of SpCell. Alternatively, all three example operations in the case where BF for P-TRP of SpCell is generated may also be applied.

Additionally, similarly, when BF for S-TRP of SpCell and/or SCell is generated, a method in which the UE transmits BFRQ through P-TRP or S-TRP may be considered.

Regarding the above-described embodiment 2 (i.e., BFRQ response), when the UE transmits the PRACH to the S-TRP of SpCell, the CORESET and/or the search space (SS) for the PRACH response to the S-TRP of SpCell may be separately configured, or a common CORESET and/or search space (SS) for both P-TRP and S-TRP may be configured. In addition, in this case, a TA value for the S-TRP may be included in a PRACH response message (e.g., a DCI or a PDSCH scheduled by the corresponding DCI, and the corresponding PDSCH may include a MAC-CE). Here, the PRACH response message may include a DL grant (for PDSCH scheduling) and/or a UL grant for subsequent BFR MAC-CE transmission.

As an example, in relation to the above-described Embodiment 3 (i.e., BFR MAC-CE transmission) and Embodiment 4 (i.e., response to the BFR MAC-CE), the UE may transmit the BFR MAC-CE to the TRP that transmitted the BFRQ, and it may be desirable to transmit and receive a response from the corresponding TRP.

(P-TRP and S-TRP classification cases according to specific identification information aspects)

Regarding the above-described Embodiment 1 (i.e., BFRQ transmission), when BF for the P-TRP of SpCell is generated, the UE may transmit BFRQ and/or SR PUCCH through th S-TRP of SpCell. Alternatively, in this case, the UE may transmit the PRACH through the P-TRP of SpCell.

In addition, in relation to the above-described Embodiment 1 (i.e., BFRQ transmission), when a BF for P-TRP of SCell is generated, the UE may transmit BFRQ and/or SR PUCCH through the P-TRP of SpCell. Alternatively, both exemplary operations in the case where the BF for the P-TRP of SpCell is generated may also be applied.

In addition, similarly, when BF for S-TRP of SpCell and/or SCell is generated, a scheme in which the UE transmits BFRQ through P-TRP or S-TRP may be considered.

In addition, in the case of this case, since synchronization between TRPs is consistent, the BFRQ response procedure in the above-described Embodiment 2 may be unnecessary. In addition, with respect to the above-described Embodiment 3 (i.e., BFR MAC-CE transmission) and Embodiment 4 (i.e., response to the BFR MAC-CE), the UE may transmit the BFR MAC-CE to the TRP that transmitted the BFRQ, and it may be preferable to be configured to receive a response thereto from the corresponding TRP.

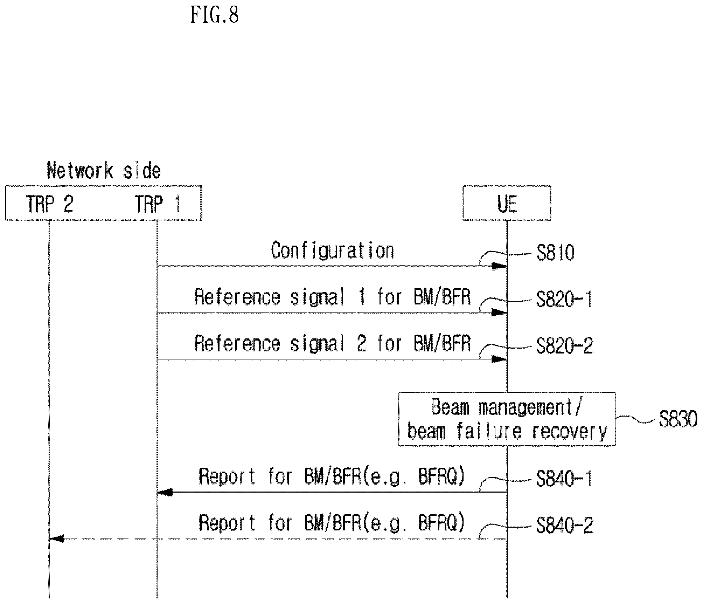

FIG. 8 is a diagram for explaining a signaling procedure according to an embodiment of the present disclosure.

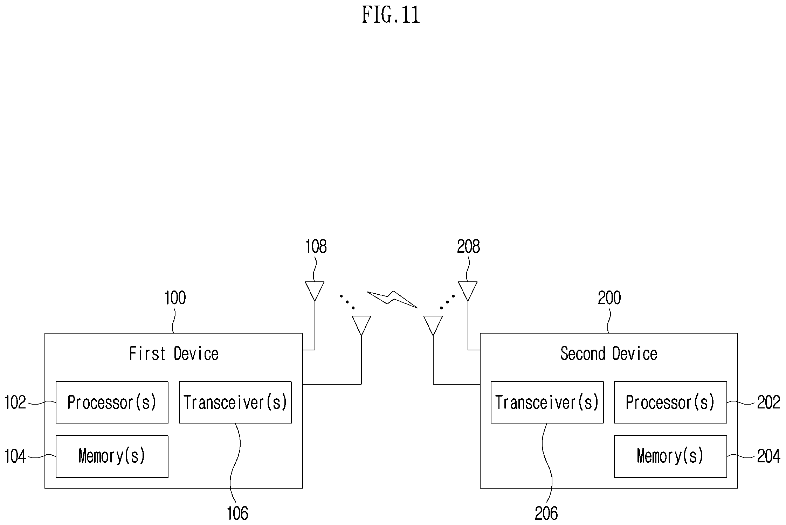

Referring to FIG. 8, FIG. 8 represents a signaling between a network side (e.g., TRP 1, TRP 2) and the UE in a situation of multiple TRPs (i.e., M-TRP, or multiple cells, hereinafter all TRPs may be replaced by cells) to which the methods proposed in the present disclosure (e.g., Embodiment 1, Embodiment 2, Embodiment 3, Embodiment 4, Embodiment 5, etc.). Here, the UE/Network side is only an example, and may be applied instead to the device of FIG. 11. FIG. 8 is only for convenience of description and does not limit the scope of the present invention. In addition, some step(s) shown in FIG. 8 may be omitted depending on situations and/or configurations.

Referring to FIG. 8 , for convenience of description, signaling between two TRPs and a UE is considered, but the corresponding signaling method may be extended and applied to signaling between multiple TRPs and multiple UEs. In the following description, the network side may be one base station including a plurality of TRPs, and may be one cell or a plurality of cells including a plurality of TRPs. For example, ideal/non-ideal backhaul may be configured between TRP 1 and TRP 2 constituting the network side. In addition, although the following description is based on a plurality of TRPs, it may be equally extended and applied to transmission through a plurality of panels. In addition, in the present disclosure, the operation of the terminal receiving a signal from TRP 1/TRP 2 may be interpreted/described as an operation for the UE to receive a signal from the network side (through/using TRP 1/TRP 2) (or it may be an operation), the operation in which the UE transmits a signal to TRP 1/TRP 2 may be interpreted/explained as an operation in which the UE transmits a signal (through/using TRP 1/TRP 2) to the network side (or it can be an operation), and conversely may also be interpreted/explained. In FIG. 8 , TRP 1 and/or TRP 2 may correspond to P-TRP and/or S-TRP described in the present disclosure.

A base station may mean a generic term for an object that transmits/receives data with a UE. For example, the base station may be a concept including one or more transmission points (TPs), one or more transmission and reception points (TRPs), and the like. In addition, the TP and/or the TRP may include a panel of a base station, a transmission and reception unit, and the like. In addition, "TRP" may be applied by replacing it with expressions such as a panel, an antenna array, a cell (e.g. macro cell/small cell/pico cell, etc.), a TP (transmission point), a base station (gNB, etc.). As described above, TRPs may be classified according to information (e.g., index, ID) on the CORESET group (or CORESET pool). For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

Specifically, FIG. 8 represents a signaling when the UE receives multiple DCI in a situation of M-TRP (or cell, hereinafter, all TRPs may be replaced by cells, or even when multiple CORESETs are configured from one TRP, it may be assumed to be M-TRP) (i.e., in a case that each TRP transmit DCI to the UE) .

The UE may receive configuration information for transmission and reception based on multiple TRPs through/using TRP 1 (and/or TRP 2) from the network side (S810). The configuration information may include information related to network side configuration (i.e., TRP configuration), resource allocation related to transmission and reception based on multiple TRPs, and the like. In this case, the configuration information may be delivered through higher layer signaling (e.g., RRC signaling, MAC-CE, etc.). In addition, when the configuration information is pre-defined or pre-configured, the corresponding step may be omitted.

For example, the configuration information may include CORESET-related configuration information (e.g., ControlResourceSet IE) as described in the above-described methods

(e.g., Embodiment 1, Embodiment 2, Embodiment 3, Embodiment 4, Embodiment 5, etc.). The CORESET-related setting information may include a CORESET-related ID (e.g., controlResourceSetID), a CORESET pool index (e.g., CORESETPoolIndex) for CORESET, time/frequency resource configuration of CORESET, and TCI information related to CORESET, etc. For example, the configuration information may include information related to beam management/BFR, etc., as described in the above-described methods (e.g., Embodiment 1, Embodiment 2, Embodiment 3, Embodiment 4, Embodiment 5, etc.).

For example, an operation in which the UE (100/200 in FIG. 11) in the above-described step S810 receives configuration information related to the multi-TRP-based transmission and reception from the network side (100/200 in FIG. 11) may be implemented by the apparatus of FIG. 11 to be described. For example, referring to FIG. 11 , one or more processors 102 may control one or more transceivers 106 and/or one or more memories 104 to receive configuration information related to transmission/reception based on the multi-TRP, and one or more transceivers 106 may receive configuration information related to the multi-TRP-based transmission and reception from the network side.

The UE may receive reference signal (RS) 1 for beam management/BFD through/using TRP 1 from the network side (S820-1). In addition, the UE may receive beam management/BFD or RS 2 for finding a new beam through/using TRP 2 from the network side (S820-2). For example, RS 1/RS 2 for the beam management/BFD/new beam may be SSB/CSI-RS. Also, steps S820-1 and S820-2 may be performed simultaneously, or one may be performed earlier than the other.

For example, the operation of receiving the RS 1 and/or the RS 2 from the network side (100/200 in FIG. 11) by the UE (100/200 in FIG) may be implemented by the device of FIG. 11 to be described below. For example, referring to FIG. 11 , one or more processors 102 may control one or more transceivers 106 and/or one or more memories 104 to receive the RS 1 and/or the RS 2, and the one or more transceivers 106 may The RS 1 and/or the RS 2 may be received from the network side.

The UE may perform beam management/BFR based on the RS 1 and/or the RS 2 received through/using TRP 1 (and/or TRP 2) from the network side (S830). Beam management/BFR operation may be performed based on the above-described beam management-related contents/beam recovery-related contents/the above-described proposed method (e.g., Embodiment 1, Embodiment 2, Embodiment 3, Embodiment 4, Embodiment 5, etc.). For example, the UE may measure/estimate the hypothetical BLER based on the reception quality of the RS 1 and/or the RS 2, and may determine whether to perform the BF accordingly.

For example, the above-described operation of performing beam management/BFR by the UE (100/200 in FIG. 12) in step S830 may be implemented by the device of FIG. 11 to be described below. For example, referring to FIG. 11 , one or more processors 102 may control one or more memories 104 or the like to perform the beam management/BFR operation.

The UE may transmit the beam management/BFR report (e.g., BFRQ, BFR MAC-CE, etc.) to the network side through/using TRP 1 and/or TRP 2 (S840-1, 5840-2). In this case, the beam management/BFR report for TRP 1 (e.g., BFRQ, BFR MAC-CE, etc.) and the beam management/BFR report for TRP 2 (e.g., BFRQ, BFR MAC-CE, etc.) may be respectively transmitted or may be combined into one. In addition, the UE may be configured to transmit a report on beam management/BFR (e.g., BFRQ, etc.) to a representative TRP (e.g., TRP 1), and a report on beam management/BFR (e.g., BFRQ, etc.) to another TRP (e.g., TRP 2) transmission may be omitted. Alternatively, the UE may be configured to transmit a BFR report (e.g., BFRQ, etc.) to a TRP same as the TRP where the beam failure occurred. Alternatively, the UE may be configured to transmit a BFR report (e.g., BFRQ, etc.) to a TRP other than the TRP where the beam failure occurred. The beam management/BFR reporting procedure may be divided into detailed procedures such as a BFRQ reporting procedure of the UE, a response procedure to the BFRQ of the base station, and a detailed BFR information reporting procedure of the UE (e.g., BFR MAC-CE) and may be performed.

For example, the beam management/BFR report (e.g., BFRQ, etc.) may be performed based on the above-described proposed method (e.g., Embodiment 1, Embodiment 2, Embodiment 3, Embodiment 4, Embodiment 5, etc.). For example, a case in which beam failure (BF) occurs for a specific TRP (e.g., event 1) and a case in which BF occurs for all TRPs (e.g., event 2) may be reported respectively. In addition, BFR may be performed on a plurality of serving cell(s)/BWP(s). For example, the beam management/BFR report (e.g., BFRQ, etc.) may be delivered based on the BFR MAC-CE. For example, BFR MAC-CE is (i) whether it is BFR for SpCell or SCell(s), (ii) beam failed CC/BWP list, (iii) Whether a new beam RS is found in each beam failed CC/BWP, (iv) a new beam RS ID (if a new beam RS was found in that beam failed CC/BWP), and/or (v) indication information for a case that BF occurs for a specific TRP (e.g., event 1) and/or a case that BF occurs for all TRPs (e.g., event 2), or the like. For example, the case of (v) may be configured in a form indicating either a bitmap format or pre-defined states. As an example, the examples of the above-described Embodiment 3 may be applied to BFR MAC-CE transmission.

For example, the network side that has received a BF report/BFRQ, etc. through/using TRP 1 and/or TRP 2 from the UE may transmit new BM/BFR related RS information for beam recovery.

For example, the UE (100/200 in FIG. 11) in the above-described steps S840-1/S840-2 reports beam management/BFR from the network side (100/200 in FIG. 11) (e.g., BFRQ, BFR MAC -CE, etc.) may be implemented by the device of FIG. 11 to be described below. For example, referring to FIG. 11 , one or more processors 102 may control one or more transceivers 106 and/or one or more memories 104 to transmit a report for beam management/BFR (e.g., BFRQ, etc.). The above transceiver 106 may transmit a report on beam management/BFR (e.g., BFRQ, etc.) to the network side.

Although not shown in FIG. 8, after the above-described steps S840-1/S840-2, the base station may transmit a response message to the UE for a report on beam management/BFR (e.g., BFRQ, BFR MAC-CE, etc.) to the UE, and the above-described Embodiment 2 and/or Embodiment 4 and the like may be applied. The UE receiving the message may perform a procedure of resetting the beam for the corresponding TRP(s) after a certain time, and the above-described Embodiment 5 or the like may be applied to this procedure.

Although not shown in FIG. 8, the UE may receive DCI 1 and Data 1 scheduled by DCI 1 through/using TRP 1 from the network side (through a beam determined based on the above-described procedure). In addition, the UE may receive DCI 2 and Data 2 scheduled by DCI 2 through/using TRP 2 from the network side. DCI (e.g., DCI 1, DCI 2) and Data (e.g., Data 1, Data 2) may be transmitted through a control channel (e.g., PDCCH, etc.) and a data channel (e.g., PDSCH, etc.), respectively. For example, DCI 1 may be received based on a first CORESET having a CORESETPoolindex set to 0 or not (e.g., default), and DCI 2 may be received based on a second CORESET having a CORESETPoolindex set to 1. For example, the DCI (e.g., DCI 1, DCI 2) and/or Data (e.g., Data 1, Data 2) may include control information/data related to the operations described in the above-described proposed method (e.g., Embodiment 1, Embodiment 2, Embodiment 3, Embodiment 4, Embodiment 5, etc.).

As mentioned above, the above-described Network side/UE signaling and operation (e.g., Embodiment 1, Embodiment 2, Embodiment 3, Embodiment 4, Embodiment 5, FIG. 8, etc.) 11) may be implemented by a device (e.g., FIG. 11) to be described below. For example, the network side (e.g., TRP 1/TRP 2) may correspond to the first radio device, and the UE may correspond to the second radio device, and vice versa.

For example, the above-described Network side/UE signaling and operation (e.g., Embodiment 1, Embodiment 2, Embodiment 3, Embodiment 4, Embodiment 5, FIG. 8, etc.) 102, 202) may be implemented by a device (e.g., FIG. 11) to be described below, and the above-described Network side/UE signaling and operation (e.g., Embodiment 1, Embodiment 2, Embodiment 3, Embodiment 4, Embodiment 5, FIG. 8, etc.) may be stored in one or more memories (e.g., 104, 204) of FIG. 11 in the form of instructions/programs (e.g. instructions, executable codes) for driving at least one processor (e.g., 102, 202) of FIG. 11.

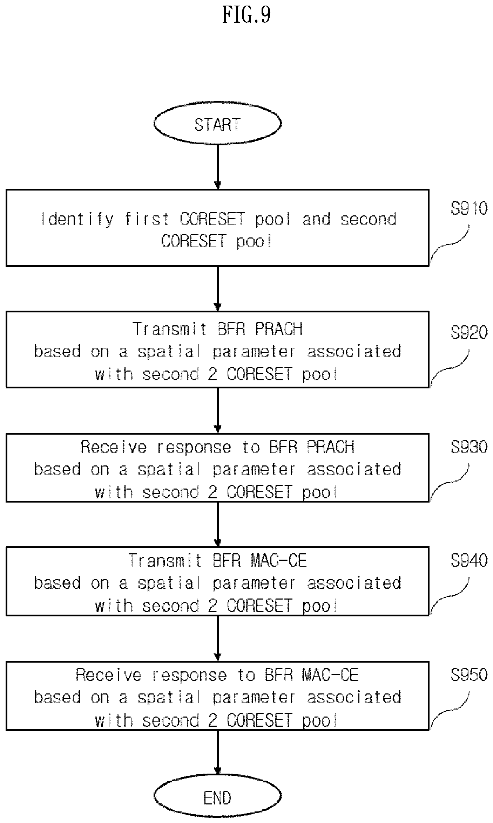

FIG. 9 illustrates an operation of a UE according to a method of performing a beam recovery procedure according to an embodiment of the present disclosure.

In FIG. 9, the operation of the UE based on the previously proposed method (e.g., any one or more (detailed) implementations of the above Embodiment 1, Embodiment 2, Embodiment 3, Embodiment 4, Embodi ment 5, and FIG. 8 and any one of the detailed embodiments thereof, or a combination of one or more (detailed) embodiments) is exemplified. The example of FIG. 9 is for convenience of description and does not limit the scope of the present disclosure. Some step(s) illustrated in FIG. 9 may be omitted depending on circumstances and/or configuration. In addition, the UE of FIG. 9 is only one example, and may be implemented as a device illustrated in FIG. 11 below. For example, the processor 102/202 of FIG. 11 may control to transmit and receive channel/signal/data/information, etc. (e.g., RRC signaling, MAC CE, DCI scheduling UL/DL, SRS, PDCCH, PDSCH, PUSCH, PUCCH, PHICH, etc.) through the transceiver 106/206, and may control to store the transmitted or received channels/signals/data/information, etc. in the memory 104/204.

In addition, the operation of FIG. 9 may be processed by one or more processors 102 and 202 of FIG. 11, and the operation of FIG. 9 may be stored in a memory (e.g., one or more memories 104 and 204 of FIG. 11 ) in the form of a command/program (e.g., instruction or executable code) for driving at least one processor (e.g., 102 and 202) of FIG 11.

In step S910, the UE may identify a first CORESET pool and a second CORESET pool. For example, in relation to the P-TRP and S-TRP described above in the present disclosure, the first CORESET pool may correspond to the P-TRP and the second CORESET pool may correspond to the S-TRP.

For example, synchronization of a corresponding UE, transmission/reception of control information/data, and/or transmission/reception of system information may be based on a spatial parameter associated with the first CORESET pool.

In relation to the embodiments described in the present disclosure, in FIG. 9, the distinction/classification between P-TRP and S-TRP is described as being based on the division of the CORESET pool, but other information for distinguishing P-TRP and S-TRP (e.g., identification information in the above-described classification example(s) of P-TRP and S-TRP) may be replaced and applied.

In step S920, when beam failure is detected for a spatial parameter associated with the first CORESET pool, the UE may transmit a PRACH for BFR based on a spatial parameter associated with the second CORESET pool. For example, in relation to the embodiments described in the present disclosure, a spatial parameter associated with the first CORESET pool may mean a beam (e.g., RS) for P-TRP, and a spatial parameter associated with the second CORESET pool may mean a beam (e.g., RS) for S-TRP. That is, for example, as in the above-described Embodiment 1, when a beam failure for P-TRP is detected, the UE may transmit a (dedicated) PRACH for BFR through S-TRP. For example, the PRACH in step S920 may be a non-contention free based PRACH.

In addition, for example, as in the above-described Embodiment 1 and/or Embodiment 2, the resource on which the PRACH is transmitted may be associated with a specific downlink RS. In this case, the spatial parameter associated with the first CORESET pool and the specific downlink RS may be based on different physical cell identifiers (PCI). That is, different PCIs may be designated/configured for the spatial parameter associated with the first CORESET pool and the specific downlink RS, and this may be relevant in cases where the second CORESET pool (i.e., S-TRP) corresponds to a non-serving cell.

In step S930, the UE may receive a response to the PRACH based on a spatial parameter associated with the second CORESET pool. For example, in relation to the embodiments described in the present disclosure, a UE may receive a response for a corresponding PRACH (e.g., PDCCH, etc.) from the S-TRP, which is a transmission target of the PRACH. The corresponding step may be based on the embodiments described in the present disclosure (particularly, Embodiment 2).

For example, at least one of a CORESET or a search space for receiving a response to the PRACH may be pre-configured/designated for the UE. In addition, the response to the PRACH may include at least one of PUSCH allocation information for subsequent MAC-CE (e.g., BFR MAC-CE) transmission, timing advance (TA) related information, or spatial parameters. In this case, based on that the spatial parameter is not included in the response to the PRACH, transmission of the MAC-CE may be based on a spatial parameter applied to transmission of the PRACH.

In step S940, the UE may transmit a MAC-CE for BFR based on a spatial parameter associated with the second CORESET pool. For example, in relation to the embodiments described in the present disclosure, a UE may transmit a MAC-CE for a corresponding BFR (i.e., BFR MAC-CE) to the S-TRP that has transmitted the PRACH response. The corresponding step may be based on the embodiments described in the present disclosure (particularly, Embodiment 3).

For example, the MAC-CE may include i) information indicating whether or not a beam has failed for at least one of the first CORESET pool and the second CORESET pool, ii) information on a component carrier (CC) in which beam failure has occurred, or iii) whether a new spatial parameter (e.g., a new beam) for at least one of the first CORESET pool or the second CORESET pool has been identified. In addition, based on a new spatial parameter for at least one of the first CORESET pool and the second CORESET pool being identified, the corresponding MAC-CE may further include identification information on the new spatial parameter (e.g., a new beam RS ID) .

In step S950, the UE may receive a response to the MAC-CE based on the spatial parameter associated with the second CORESET pool. For example, in relation to the embodiments described in the present disclosure, a UE may receive a response (e.g., a response message/DCI, etc.) for a corresponding BFR MAC-CE from an S-TRP, which is a transmission target of the BFR MAC-CE. there is. The corresponding step may be based on the embodiments described in the present disclosure (particularly, Embodiment 4).

In addition, for example, although not disclosed in FIG. 9, based on the above-described response to the MAC-CE, the UE may reset a spatial parameter for at least one of the first CORESET pool and the second CORESET pool after a preset time (eg, 28 symbols) based on the time point of receiving the corresponding response. For example, the UE may reset the DL/UL beam using new beam information (e.g., new beam RS) for P-TRP and/or S-TRP after a certain time from the time of receiving the BFR MAC-CE. The corresponding operation may be based on the embodiments described in the present disclosure (particularly, Embodiment 5).

In this case, when a new spatial parameter for the first CORESET pool is identified (e.g., when the UE finds a new beam for P-TRP), the spatial parameter for downlink reception or uplink transmission of the corresponding UE may be configured as the new spatial parameter. Alternatively, when a new spatial parameter for the first CORESET pool is not identified and a new spatial parameter for the second CORESET pool is identified (e.g., the UE may not find/identify a new beam for the P-TRP, and find/identify a new beam for the S-TRP), spatial parameters for downlink reception or uplink transmission of the corresponding UE may be configured as new spatial parameters for the second CORESET pool.

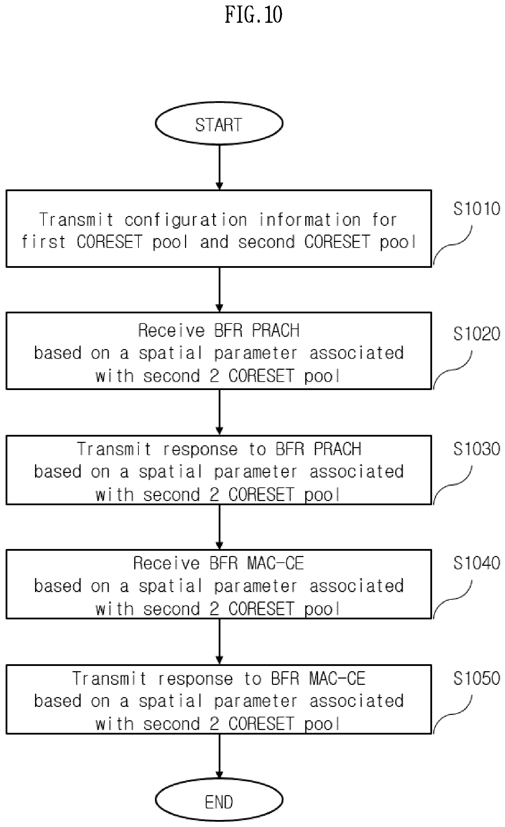

FIG. 10 illustrates a base station/network operation according to a method of performing a beam recovery procedure according to an embodiment of the present disclosure.

In FIG. 10, the operation of the base station/network based on the previously proposed method (e.g., any one or more (detailed) implementations of the above Embodiment 1, Embodiment 2, Embodiment 3, Embodiment 4, Embodiment 5, and FIG. 8 and any one of the detailed embodiments thereof, or a combination of one or more (detailed) embodiments) is exemplified. The example of FIG. 10 is for convenience of description and does not limit the scope of the present disclosure. Some step(s) illustrated in FIG. 10 may be omitted depending on circumstances and/or configuration. In addition, the base station/network of FIG. 10 is only one example, and may be implemented as a device illustrated in FIG. 11 below. For example, the processor 102/202 of FIG. 11 may control to transmit and receive channel/signal/data/information, etc. (e.g., RRC signaling, MAC CE, DCI scheduling UL/DL, SRS, PDCCH, PDSCH, PUSCH, PUCCH, PHICH, etc.) through the transceiver 106/206, and may control to store the transmitted or received channels/signals/data/information, etc. in the memory 104/204.

In addition, the operation of FIG. 10 may be processed by one or more processors 102 and 202 of FIG. 11, and the operation of FIG. 10 may be stored in a memory (e.g., one or more memories 104 and 204 of FIG. 11 ) in the form of a command/program (e.g., instruction or executable code) for driving at least one processor (e.g., 102 and 202) of FIG 11.

In step S1010, the base station/network may transmit configuration information for a first CORESET pool and a second CORESET pool to the UE. For example, in relation to the P-TRP and S-TRP described above in the present disclosure, the first CORESET pool may correspond to the P-TRP and the second CORESET pool may correspond to the S-TRP.

Since the contents of the first CORESET pool and the second CORESET pool in step S1010 are the same as/similar to the description of step S910 of FIG. 9, detailed descriptions of overlapping contents are omitted.

In step S1020, when beam failure is detected (by the corresponding UE) for a spatial parameter associated with the first CORESET pool, the base station/network may receive a PRACH for BFR based on a spatial parameter associated with the second CORESET pool from the UE. That is, for example, as in the above-described Embodiment 1, when a beam failure for P-TRP is detected, the base station/network may receive a (dedicated) PRACH for BFR through S-TRP.

Since PRACH reception in step S1020 is the same as/similar to the description of PRACH transmission in step S920 of FIG. 9, a detailed description of the overlapping content is omitted.

In step S1030, the base station/network may transmit a response to the PRACH based on a spatial parameter associated with the second CORESET pool. For example, in relation to the embodiments described in the present disclosure, the base station/network may transmit a response (e.g., PDCCH, etc.) to a corresponding PRACH through an S-TRP, which is a transmission target of the PRACH. The corresponding step may be based on the embodiments described in the present disclosure (particularly, Embodiment 2).

Since the PRACH response transmission in step S1030 is the same as/similar to the PRACH response reception in step S930 of FIG. 9, a detailed description of the overlapping content is omitted.

In step S1040, the base station/network may receive a MAC-CE for BFR based on a spatial parameter associated with the second CORESET pool. For example, in relation to the embodiments described in the present disclosure, the base station/network may receive a MAC-CE for a corresponding BFR (i.e., BFR MAC-CE) through the S-TRP that transmits a PRACH response. The corresponding step may be based on the embodiments described in the present disclosure (particularly, Embodiment 3) .

Since the content of BFR MAC-CE reception in step S1040 is the same as/similar to the description of BFR MAC-CE transmission in step S940 of FIG. 9, a detailed description of the overlapping content is omitted.

In step S1050, the base station/network may transmit a response to the MAC-CE based on the spatial parameter associated with the second CORESET pool. For example, in relation to the embodiments described in the present disclosure, the base station/network may trnasmit a response (e.g., a response message/DCI, etc.) to a corresponding BFR MAC-CE through the S-TRP, which is a transmission target of the BFR MAC-CE. The correponding step may be based on the embodiments described in the present disclosure (particularly, Embodiment 4).

Since the contents of the BFR MAC-CE response transmission in step S1050 are the same as/similar to the description of the BFR MAC-CE response reception in step S950 of FIG. 9, a detailed description of the overlapping contents is omitted.

In addition, the content of resetting the spatial parameter based on the response to the MAC-CE described in FIG. 9 may be equally applied to the base station/network operation in FIG. 10, and detailed description of the overlapping content is omitted.

General Device to which the Present Disclosure may be applied

FIG. 12 illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for performing beam failure recovery (BFR) by a user equipment (UE) in a wireless communication system, the method comprising:

   identifying a first control resource set (CORESET) pool and a second CORESET pool based on configuration information;
   based on detecting beam failure for a spatial parameter associated with the first CORESET pool, transmitting a physical random access channel (PRACH) for the BFR based on a spatial parameter associated with the second CORESET pool;
   receiving a response to the PRACH based on the spatial parameter associated with the second CORESET pool;
   transmitting a MAC-CE for the BFR based on the spatial parameter associated with the second CORESET pool; and
   receiving a response to the MAC-CE based on the spatial parameter associated with the second CORESET pool.

2. The method of claim 1,
   wherein at least one of a CORESET or a search space for receiving the response to the PRACH is pre-configured for the UE.

3. The method of claim 1,
   wherein a PRACH resource on which the PRACH transmitted is configured in association with a specific downlink RS.

4. The method of claim 3,

wherein the spatial parameter associated with the second CORESET pool and the specific downlik RS are based on different physical cell identifiers (PCIs).

5. The method of claim 1,
wherein the response to the PRACH includes at least one of physical uplink shared channel (PUSCH) allocation information for the transmission of MAC-CE, timing advance (TA) related information, or spatial parameter for transmission of the MAC-CE.

6. The method of claim 5,
wherein, based on the response to the PRACH not including the spatial parameter, transmission of the MAC-CE is based on a spatial parameter applied to transmission of the PRACH.

7. The method of claim 1,
wherein the MAC-CE includes one or more of i) information indicating whether beam failure is performed for at least one of the first CORESET pool or the second CORESET pool, ii) information of a component carrier (CC) in which beam failure occurred, or iii) whether a new spatial parameter for at least one of the first CORESET pool or the second CORESET pool is identified.

8. The method of claim 7,
wherein based on a new spatial parameter for at least one of the first CORESET pool or the second CORESET pool being identified, the MAC-CE further include identification information on the new spatial parameter.

9. The method of claim 1, further comprising:

based on the response to the MAC-CE,
resetting a spatial parameter for at least one of the first CORESET pool or the second CORESET pool, after a pre-configured time based on a timing of receiving the response.

10. The method of claim 9,
wherein, based on a new spatial parameter for the first CORESET pool being identified, a spatial parameter for downlink reception or uplink transmission of the UE is configured with the new spatial parameter.

11. The method of claim 9,
wherein, based on a new spatial parameter for the first CORESET pool not being identified and a new spatial parameter for the second CORESET pool being identified, a spatial parameter for downlink reception or uplink transmission of the UE is configured with the new spatial parameter for the second CORESET pool.

12. The method of claim 1,
wherein synchronization or transmission and reception of the UE is based on the spatial parameter associated with the first CORESET pool.

13. The method of claim 1,
wherein the PRACH corresponds to a contention free based PRACH.

14. A user equipment (UE) for performing beam failure recovery (BFR) in a wireless communication system, the UE comprising:

at least one transceiver; and
at least one processor coupled with the at least one transceiver,
wherein the at least one processor is configured to:

identify a first control resource set (CORESET) pool and a second CORESET pool based on configuration information;
based on detecting beam failure for a spatial parameter associated with the first CORESET pool, transmit a physical random access channel (PRACH) for the BFR based on a spatial parameter associated with the second CORESET pool;
receive a response to the PRACH based on the spatial parameter associated with the second CORESET pool;

transmit a MAC-CE for the BFR based on the spatial parameter associated with the second CORESET pool; and

receive a response to the MAC-CE based on the spatial parameter associated with the second CORESET pool.

15. A method for performing beam failure recovery (BFR) by a base station in a wireless communication system, the method comprising:

based on detecting beam failure for a spatial parameter associated with the first CORESET pool, receiving a physical random access channel (PRACH) for the BFR based on a spatial parameter associated with the second CORESET pool;

transmitting a response to the PRACH based on the spatial parameter associated with the second CORESET pool;

receiving a MAC-CE for the BFR based on the spatial parameter associated with the second CORESET pool; and

transmitting a response to the MAC-CE based on the spatial parameter associated with the second CORESET pool.

16. A base station for performing beam failure recovery (BFR) in a wireless communication system, the base station comprising:

at least one transceiver; and

at least one processor coupled with the at least one transceiver,

wherein the at least one processor is configured to:

based on detecting beam failure for a spatial parameter associated with the first CORESET pool, receive a physical random access channel (PRACH) for the BFR based on a spatial parameter associated with the second CORESET pool;

transmit a response to the PRACH based on the spatial parameter associated with the second CORESET pool;

receive a MAC-CE for the BFR based on the spatial parameter associated with the second CORESET pool; and

transmit a response to the MAC-CE based on the spatial parameter associated with the second CORESET pool.

17. A processing apparatus configured to control a user equipment (UE) to perform beam failure recovery (BFR) in a wireless communication system, the processing apparatus comprising:

at least one processor; and

at least one computer memory operably connected to the at least one processor and storing instructions that, based on being executed by the at least one processor, perform operations comprising:

identifying a first control resource set (CORESET) pool and a second CORESET pool based on configuration information;

based on detecting beam failure for a spatial parameter associated with the first CORESET pool, transmitting a physical random access channel (PRACH) for the BFR based on a spatial parameter associated with the second CORESET pool;

receiving a response to the PRACH based on the spatial parameter associated with the second CORESET pool;

transmitting a MAC-CE for the BFR based on the spatial parameter associated with the second CORESET pool; and

receiving a response to the MAC-CE based on the spatial parameter associated with the second CORESET pool.

18. At least one non-transitory computer-readable medium storing at least one instruction,

wherein the at least one instruction executable by at least one processor controls a device performing beam failure recovery (BFR) in a wireless communication system to:

identify a first control resource set (CORESET) pool and a second CORESET pool based on configuration information;

based on detecting beam failure for a spatial parameter associated with the first CORESET pool, transmit a physical random access channel (PRACH) for the BFR based on a spatial parameter associated with the second CORESET pool;

receive a response to the PRACH based on the spatial parameter associated with the second CORESET pool;

transmit a MAC-CE for the BFR based on the spatial parameter associated with the second CORESET pool; and

receive a response to the MAC-CE based on the spatial parameter associated with the second CORESET pool.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

FIG.4

FIG.5

Resource grid

A carrier
(up to 3300 subcarriers,i.e.,275 RBs)

A BWP

1 RB=12 subcarrier

1 RE

1 subcarrier

1 Symbol

l=0 ‥‥‥

k=0

FIG.6

INITIAL CELL SEARCH

PSS/SSS& [DLRS]& PBCH — S601

SYSTEM INFORMATION RECEPTION

PDCCH/ PDSCH (BCCH) — S602

RANDOM ACCESS PROCEDURE

PRACH — S603
PDCCH/ PDSCH — S604
PUSCH — S605
PDCCH/ PDSCH — S606

GENERAL DL/UL Tx/Rx

PDCCH/ PDSCH — S607
PUSCH/ PUCCH — S608

· DL/UL ACK/NACK
· UE CQI/PMI RI REPORT
  USING PUSCH AND PUCCH

# FIG.7

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

FIG.8

Network side

TRP 2 | TRP 1

UE

S810 — Configuration

S820-1 — Reference signal 1 for BM/BFR

S820-2 — Reference signal 2 for BM/BFR

S830 — Beam management / beam failure recovery

S840-1 — Report for BM/BFR(e.g. BFRQ)

S840-2 — Report for BM/BFR(e.g. BFRQ)

# FIG.9

START

Identify first CORESET pool and second CORESET pool — S910

Transmit BFR PRACH based on a spatial parameter associated with second 2 CORESET pool — S920

Receive response to BFR PRACH based on a spatial parameter associated with second 2 CORESET pool — S930

Transmit BFR MAC-CE based on a spatial parameter associated with second 2 CORESET pool — S940

Receive response to BFR MAC-CE based on a spatial parameter associated with second 2 CORESET pool — S950

END

# FIG.10

START

Transmit configuration information for
first CORESET pool and second CORESET pool — S1010

Receive BFR PRACH
based on a spatial parameter associated
with second 2 CORESET pool — S1020

Transmit response to BFR PRACH
based on a spatial parameter associated
with second 2 CORESET pool — S1030

Receive BFR MAC-CE
based on a spatial parameter associated
with second 2 CORESET pool — S1040

Transmit response to BFR MAC-CE
based on a spatial parameter associated
with second 2 CORESET pool — S1050

END

EP 4 376 314 A1

# FIG.11

## INTERNATIONAL SEARCH REPORT

| International application No. |
|---|
| **PCT/KR2022/010612** |

| A. | CLASSIFICATION OF SUBJECT MATTER |
|---|---|

**H04B 7/0408**(2017.01)i; **H04B 7/06**(2006.01)i; **H04B 17/318**(2014.01)i; **H04W 74/08**(2009.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04B 7/0408(2017.01); H04B 7/06(2006.01); H04B 7/08(2006.01); H04L 5/00(2006.01); H04W 16/28(2009.01); H04W 76/19(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔 실패 복구(beam failure recovery), CORESET 풀(control resource set pool), 공간 파라미터(spatial parameter), PRACH(physical random access channel)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021-107575 A1 (SAMSUNG ELECTRONICS CO., LTD.) 03 June 2021 (2021-06-03)<br>See paragraphs [0246] and [0253]. | 1-18 |
| Y | US 2020-0350972 A1 (YI, Yunjung et al.) 05 November 2020 (2020-11-05)<br>See paragraphs [0280], [0283], [0330], [0377], [0383]-[0390], [0422]-[0423], [0437] and [0445]. | 1-18 |
| Y | LG ELECTRONICS. Enhancements on beam management for multi-TRP. R1-2105781, 3GPP TSG RAN WG1 #105-e, e-Meeting. 12 May 2021.<br>See section 2.2. | 12 |
| A | US 2021-0021329 A1 (QUALCOMM INCORPORATED) 21 January 2021 (2021-01-21)<br>See paragraphs [0077]-[0103]; and figures 7A-14B. | 1-18 |
| A | US 2021-0044342 A1 (QUALCOMM INCORPORATED) 11 February 2021 (2021-02-11)<br>See paragraphs [0065]-[0095]; and figures 4-10. | 1-18 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2022** | **21 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/010612**

| Patent document cited in search report | | | Publication date (day/month/year) | Patent family member(s) | | | Publication date (day/month/year) |
|---|---|---|---|---|---|---|---|
| WO | 2021-107575 | A1 | 03 June 2021 | KR 10-2021-0064024 | | A | 02 June 2021 |
| US | 2020-0350972 | A1 | 05 November 2020 | US | 11211990 | B2 | 28 December 2021 |
| US | 2021-0021329 | A1 | 21 January 2021 | WO | 2021-011133 | A1 | 21 January 2021 |
| US | 2021-0044342 | A1 | 11 February 2021 | CN | 114175847 | A | 11 March 2022 |
| | | | | EP | 4011170 | A1 | 15 June 2022 |
| | | | | WO | 2021-025827 | A1 | 11 February 2021 |

Form PCT/ISA/210 (patent family annex) (July 2022)